# EUROPÄISCHE PATENTSCHRIFT

(11) **EP 4 256 350 B1**
(45) Veröffentlichungstag und Bekanntmachung des Hinweises auf die Patenterteilung: **18.06.2025**
(21) Anmeldenummer: 21836021.2
(22) Anmeldetag: 06.12.2021
(51) Int. Cl.: G01P 3/489, G01P 3/487, G01P 7/00, G01P 21/02, G01D 5/14

(54) **VERFAHREN UND VORRICHTUNG ZUR ERMITTLUNG EINES GESCHWINDIGKEITSWERTES EINES FAHRZEUGS**
METHOD AND DEVICE FOR ASCERTAINING A SPEED VALUE OF A VEHICLE
PROCÉDÉ ET DISPOSITIF D'ÉVALUATION DE VITESSE D'UN VÉHICULE

(30) Priorität: 07.12.2020 DE 102020215425
(43) Veröffentlichungstag der Anmeldung: 11.10.2023
(73) Patentinhaber: Robert Bosch GmbH, 70442 Stuttgart (DE)
(72) Erfinder: HAU, Julian, 72768 Reutlingen (DE)
(86) Internationale Anmeldenummer: PCT/EP2021/084344
(87) Internationale Veröffentlichungsnummer: WO 2022/122633

(56) Entgegenhaltungen:
- EP-A2- 3 435 094
- DE-A1- 3 342 553
- DE-A1- 3 816 039
- US-A1- 2006 119 348
- US-A1- 2006 152 226
- US-A1- 2020 010 207

## Beschreibung

Die Erfindung betrifft ein Verfahren und eine Vorrichtung zur Ermittlung eines Geschwindigkeitswertes eines Fahrzeugs sowie ein Fahrzeug, welches ein entsprechenden Verfahren oder Vorrichtung aufweist.

### Stand der Technik

EP 3 435 094 A2 offenbart eine Auswerteeinheit, welche das Bewegungsverhalten eines Rads eines Zweirads erfasst.

Bei gängigen Systemen zur Geschwindigkeitserfassung an Fahrrädern wird ein Magnet an einer Speiche befestigt, die sich bei der Fortbewegung des Fahrrads mit dem Rad um die Achse des Rades dreht. Zur Detektion dieser Drehbewegung und somit zur Ermittlung der Fortbewegungsgeschwindigkeit wird ein Magnetfeldsensor, üblicherweise in Form eines Hall-Sensors, an der Gabel befestigt, so dass bei jedem Durchgang des Magneten ein magnetischer Impuls erzeugt wird. Aus dem zeitlichen Abstand zweier nacheinander erzeugter Impulse wird mit Kenntnis des Raddurchmessers die Drehgeschwindigkeit beziehungsweise die Fortbewegungsgeschwindigkeit des Fahrrads abgeleitet.

Die Erfassung des magnetischen Impulses kann jedoch problematisch sein, wenn sich der Magnet in einer zu großen Entfernung vom Magnetfeldsensor befindet oder der Magnetfeldsensor eine zu geringe Messintensität aufweist. Darüber hinaus können Störmagnetfelder die Erfassung erschweren.

Die Aufgabe der vorliegenden Erfindung ist, die Erfassung der Magnetimpulse zu verbessern, insbesondere beim Auftreten von Störmagnetfeldern.

### Offenbarung der Erfindung

Mit der vorliegenden Erfindung wird ein Verfahren und eine Vorrichtung zur Ermittlung eines Geschwindigkeitswertes eines Fahrzeugs beansprucht, sowie ein Fahrzeug, welches eine derartige Vorrichtung beziehungsweise ein entsprechendes Verfahren aufweist. Hierbei kann es sich bei dem Fahrzeug sowohl um ein Kraftfahrzeug als auch um ein elektrisch und/oder manuell angetriebenes Zweirad handeln, zum Beispiel ein Fahrrad, ein Elektrofahrrad, ein eScooter oder ein Motorrad.

Zur Ermittlung des Geschwindigkeitswertes werden mittels eines Sensors, zum Beispiel eines Magnetfeldsensors, wenigstens erste und zweite Sensorgröße erfasst, die die Bewegung eines Rades des Fahrzeugs repräsentieren. Aus dem zeitlichen Abstand der ersten und zweiten Sensorgrößen wird der Geschwindigkeitswert ermittelt. Hierzu werden die Sensorgrößen beziehungsweise die erfassten Sensorwerte jeweils mit einem ersten Schwellenwert verglichen, wobei der zeitliche Abstand zwischen der insbesondere Überschreitung dieser Sensorgröße ermittelt wird. Der Kern der Erfindung besteht dabei darin, dass mittels eines zweiten Sensors, nämlich eines Beschleunigungssensors oder eines Inertialsensors, eine Fortbewegungsgröße erfasst wird, die die Bewegung des Fahrzeugs in Fahrtrichtung beziehungsweise Längsrichtung repräsentiert. Ausgehend von dieser Fortbewegungsgröße wird eine Zeitdauer abgeleitet, innerhalb der nach der Überschreitung des ersten Schwellenwerts durch die erste Sensorgröße das Überschreiten des ersten Schwellenwerts durch die zweite Sensorgröße zu erwarten ist. Wird dabei keine Überschreitung des ersten Schwellenwerts durch die zweite Sensorgröße nach Ablauf der Zeitdauer erkannt, wird ein zweiter Schwellenwert festgelegt, der niedriger als der erste Schwellenwert ist. Dieser niedrigere zweite Schwellenwert wird bei der nachfolgenden Ermittlung des Geschwindigkeitswertes bei der Bestimmung des zeitlichen Abstands der ersten und zweiten Sensorgröße und insbesondere bei dem Vergleich verwendet.

Der Vorteil bei einer derartigen Veränderung und Nutzung eines zweiten niedrigeren Schwellenwertes liegt darin, dass bei einer Störung der Erfassung oder bei einer Reduzierung der Signalstärke der Sensorgrößen die Bestimmung des Geschwindigkeitswerts an die gestörte oder reduzierte Signalstärke angepasst wird. Sollte dagegen keine Störung des Signals der Sensorgröße vorliegen oder erkannt werden, wird die Bestimmung des Geschwindigkeitswerts ohne Änderung des Vergleichs auf den zweiten Schwellenwert durchgeführt.

In einer Weiterbildung der Erfindung ist vorgesehen, dass die Zeitdauer, die aus der Fortbewegungsgröße abgeleitet wird, kleiner als der zu erwartende zeitliche Abstand zwischen dem Überschreiten des ersten Schwellenwerts durch die erste und zweite Sensorgröße ist. Dabei kann beispielsweise vorgesehen sein, dass die Zeitdauer einen prozentual geringen Wert aufweist, z.B. 90 %, 75 % oder 60 %, um Änderungen in der (Dreh-)Geschwindigkeit während der Messwerterfassung und Messungenauigkeiten zu berücksichtigen.

Weiterhin kann vorgesehen sein, dass der zweite Schwellenwert in Form einer prozentualen Absenkung oder Erniedrigung des ersten Schwellenwerts festgelegt wird. Hierbei kann beispielsweise eine Absenkung auf 90 %, 80 %, 75 % oder 60 % vorgesehen sein. Generell kann vorgesehen sein, dass die Absenkung oder Erniedrigung des zweiten Schwellenwerts in mehreren Stufen erfolgt. Dies kann sinnvoll sein, wenn auch der festgelegte zweite Schwellenwert nicht nach Ablauf der Zeitdauer durch wenigstens eine der Sensorgrößen überschritten wird.

In einer optionalen Ausgestaltung der Erfindung kann vorgesehen sein, dass während des Vergleichs der ersten und/oder zweiten Sensorgröße mit dem zweiten Schwellenwert eine Differenz zwischen dem maximalen Wert der entsprechenden Sensorgröße und dem zweiten Schwellenwert gebildet wird. Übersteigt die Differenz einen positiven vorgegebenen ersten Wert, kann das als Zeichen gewertet werden, dass die Signalstärke zugenommen hat. In diesem Fall kann vorgesehen sein, dass der zweite Schwellenwert erhöht wird, beispielsweise schrittweise oder auf den ursprünglichen ersten Schwellenwert. Wird jedoch eine negative Differenz festgestellt, d.h. die entsprechende Sensorgröße oder deren Maximalwert liegt unterhalb des zweiten Schwellenwerts, insbesondere unterhalb eines zweiten vorgegebenen Wertes für die Differenz, kann vorgesehen sein, dass der zweite Schwellenwert weiter reduziert oder erniedrigt wird. Sowohl die Erhöhung als auch die Erniedrigung kann dabei davon abhängig gemacht werden, dass die entsprechende Differenz bei wenigstens zwei Vergleichen jeweils über oder unter dem entsprechenden vorgegebenen Wert liegt. Hierdurch werden kurzzeitige Veränderungen in der Signalstärke unberücksichtigt gelassen.

In einer Weiterbildung kann vorgesehen sein, dass neben dem Vergleich der Sensorgröße mit dem zweiten Schwellenwert auch ein Vergleich mit dem ersten Schwellenwert erfolgt. Wird dabei erkannt, dass die jeweilige Sensorgröße sowohl den zweiten als auch die ersten Schwellenwert übersteigt, kann der zweite Schwellenwert auf den Wert des ersten Schwellenwertes für die weitere Ermittlung des Geschwindigkeitswerts oder der Bestimmung des zeitlichen Abstands festgelegt werden. Hierbei kann ebenfalls vorgesehen sein, dass die Veränderung des zweiten Schwellenwerts erst erfolgt, wenn wenigstens bei zwei aufeinander folgenden Vergleichen jeweils die erste und die zweite Sensorgröße den zweiten und den ersten Schwellenwert übersteigt.

Generell ist vorgesehen, die Ermittlung des Geschwindigkeitswertes fortlaufend durchzuführen. Dabei kann für nachfolgende Bestimmungen des zeitlichen Ablaufs beziehungsweise für die Ermittlung des Geschwindigkeitswertes im Rahmen des Vergleichs zunächst der erste Schwellenwert verwendet werden. Wird eine zu geringe Signalstärke erkannt, unabhängig davon ob beim Vergleich mit der ersten oder zweiten Sensorgröße, kann für die weiteren Vergleiche und somit Ermittlungen der Geschwindigkeitswerte der niedrigere zweite Schwellenwert verwendet werden. Durch die Überprüfung, inwieweit die Signalstärke wieder zunimmt und auch den ersten Schwellenwert wieder übersteigt, kann bei einer entsprechenden Erhöhung der Signalstärke der zweite Schwellenwert auf den Wert des ursprünglichen ersten Schwellenwerts gesetzt werden.

Das erfindungsgemäße Verfahren zur Ermittlung des Geschwindigkeitswertes sowie der Anpassung der Schwellenwerte kann ebenfalls in einer Steuereinheit ausgeführt werden. Hierzu erfasst die Steuereinheit die Sensorgrößen eines ersten Sensors, der beispielsweise am Fahrzeug und insbesondere an einem mit der Fortbewegung sich ebenfalls bewegenden Teils befestigt ist. Der Geschwindigkeitswert kann anschließend als Ausgabeinformation ausgegeben werden oder intern für weitere Zwecke zur Verarbeitung zur Verfügung gestellt werden. Weiterhin erfasst die Steuereinheit die Fortbewegungsgröße eines zweiten Sensors, der ebenfalls am Fahrzeug verbaut ist, vorzugsweise an einem starren Element, welches sich lediglich mit dem Fahrzeug in Fahrtrichtung oder Längsrichtung bewegt. Die Sensorgrößen des ersten und zweiten Sensors können dabei durch die Steuereinheit an getrennten Eingängen erfasst werden. Optional kann auch vorgesehen sein, dass die Steuereinheit zur Erfassung der Sensorgrößen beider Sensoren nur einen Eingang aufweist. Dabei ist jedoch darauf zu achten, dass die Sensorgrößen kodiert sind, so dass die Steuereinheit die unterschiedlichen Größen der Sensoren identifizieren und zuordnen kann. Es ist auch möglich, dass der eine Eingang gesteuert ist, so dass die Steuereinheit gezielt die Sensorgrößen beider Sensoren getrennt abfragen und/oder erfassen kann.

Weitere Vorteile ergeben sich aus der nachfolgenden Beschreibung von Ausführungsbeispielen bzw. aus den abhängigen Patentansprüchen.

### Kurze Beschreibung der Zeichnungen

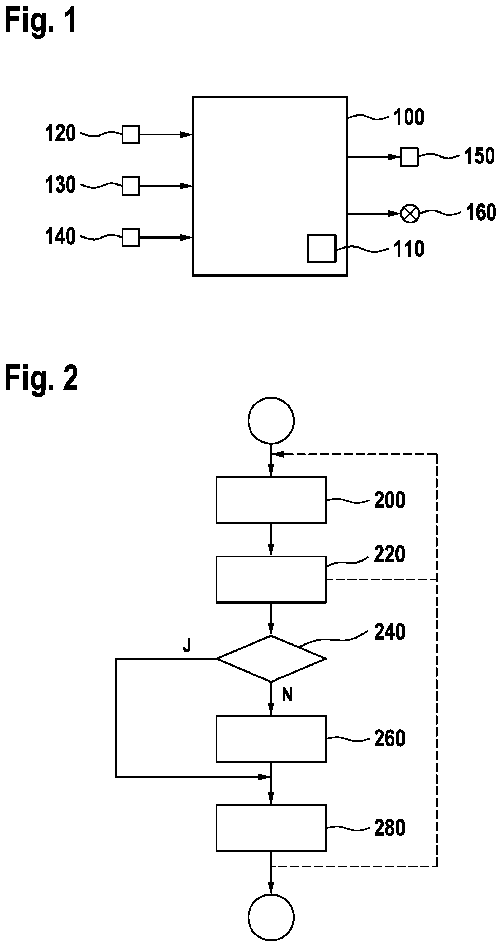

In der Figur 1 ist schematisch eine Steuereinheit vorgesehen, die ein erfindungsgemäßes Verfahren gemäß dem Flussdiagramm der Figur 2 ausführt.

### Ausführungsformen der Erfindung

Anhand des nachfolgenden Ausführungsbeispiels soll die Erfindung bei Ermittlung des Geschwindigkeitswertes an einem Fahrrad, insbesondere einem Elektrofahrrad, verdeutlicht werden. Es wird jedoch klargestellt, dass die Anwendung der Erfindung nicht auf die Ermittlung des Geschwindigkeitswertes an einem Fahrrad begrenzt ist. Vielmehr soll mit der Erfindung jedwede Geschwindigkeitsermittlung an beliebigen Fahrzeugen beansprucht werden bei dem ein zeitlichen Abstand zweier Sensorgrößen als Grundlage dient.

Im Blockschaltbild der Figur 1 ist eine Steuereinheit 100 dargestellt, die das erfindungsgemäße Verfahren ausführt, wie es anhand eines Ausführungsbeispiels im Flussdiagramm der Figur 2 beschrieben wird. Zur Ermittlung des Geschwindigkeitswertes erfasst die Steuereinheit 100 die Sensorsignale eines insbesonderen externen ersten Sensors 120. Dieser erste Sensor 120 kann beispielsweise als Magnetfeldsensor die Sensorsignale eines Magneten erfassen, der sich an einem Rad des Fahrrads mit der Fortbewegung des Fahrrads um die Radachse dreht. Hierbei nähert und entfernt sich der Magnet vom Magnetfeldsensor, wodurch sich ein charakteristischer Signalverlauf ergibt, wobei die Frequenz der Sinuskurve ein Maß für die Drehbewegung des Rades darstellt. Aus der Kenntnis des Umfangs kann somit die Geschwindigkeit des Fahrrads abgeleitet werden. Zur Erfassung der Frequenz der Sinuskurve wird üblicherweise ein erster Schwellenwert SW₁ verwendet, der im Speicher 110 der Steuereinheit 100 abgespeichert sein kann, mit dem die Signalgröße des ersten Sensors 120. beziehungsweise des Magnetfeldsensors verglichen wird. Die Frequenz der Radbewegung wird dabei erkannt, indem der zeitliche Abstand zwischen der zweimaligen Überschreitung des ersten Schwellenwert SW₁ durch die erfasste Sensorgröße bestimmt wird. Da die hierzu verwendeten Magnetfeldsensoren üblicherweise nur eine begrenzte räumliche Erfassung aufweisen, werden typischerweise keine vollständigen Sinusverläufe des Magnetfelds erfasst, sondern stattdessen einzelne Pulse mit einer Breite, die abhängig von der Länge des Magneten sowie der Drehbewegung des Rades ist. In diesem Fall wird der zeitliche Abstand zweier Pulse erfasst, indem die Sensorgröße des ersten Sensors 120 mit dem ersten Schwellenwert SW₁ verglichen wird und der zeitliche Abstand zwischen dem Überschreiten des ersten Schwellenwerts SW₁ durch zwei nacheinander erfassten Sensorgrößen bestimmt wird. Der somit abgeleitete Geschwindigkeitswert kann an eine weitere Verarbeitungseinheit 150 weitergeleitet werden, zum Beispiel zu Steuerungszwecken eines elektrischen Motors eines Elektrofahrrads, an eine Anzeigeeinrichtung 160 weitergeleitet oder intern für Regelungs- oder Steuerzwecke verwendet werden.

Durch Störungen der Magnetfelder kann es jedoch vorkommen, dass der Magnetfeldsensor nur ein vermindertes Magnetfeld des Magneten erfassen kann, so dass die so erfasste Signalgröße nicht mehr über den ersten Schwellenwert SW₁ liegen. Um derartige Störungen zu berücksichtigen und die Qualität der Ermittlung des Geschwindigkeitswertes zu erhöhen, ist vorgesehen, dass mittels der Erfassung einer alternativen Bewegungsgröße eine Möglichkeit geschaffen wird, die Erfassung an eine verringerte Signalstärke anzupassen. Hierzu wird durch einen Beschleunigungssensor 130 oder einen Intertialsensors 140 eine Fortbewegungsgröße erfasst, die die Bewegung des Fahrrads in Richtung der Fortbewegung oder in Längsrichtung repräsentiert. Der Beschleunigungssensor 130 beziehungsweise der Intertialsensor 140 kann dabei am Rahmen oder in einem Bauteil am Fahrrad, z.B. in einer Anzeige- und/oder Steuereinheit am Lenker vorgesehen sein. Es ist auch möglich, dass die Fortbewegungsgröße mittels der Sensoren in einem mobilen Endgerät erzeugt und der Steuereinheit 100 zur Verfügung gestellt wird. Derartige mobile Endgeräte können beispielsweise in Form eines Smartphones temporär am Lenker befestigt oder vom Fahrer mitgetragen werden. Basierend auf der so erfassten Fortbewegungsgröße kann das Verfahren in der Steuereinheit 100 eine Zeitdauer abschätzen, innerhalb der nach der ersten Sensorgröße, die den ersten Schwellenwert SW₁ übersteigt, eine Überschreitung des gleichen Schwellenwerts durch eine zweite Sensorgröße zu erwarten ist, wenn es zu keiner maßgeblichen Geschwindigkeitsänderung des Fahrrads kommt. Wird dabei festgestellt, dass nach dieser Zeitdauer, optional innerhalb eines vorgebbaren Zeitraums, keine derartige Überschreitung erfolgt, wird für die nachfolgende Ermittlung des Geschwindigkeitswertes ein niedrigerer zweiter Schwellenwert SW₂ festgelegt.

Das Flussdiagramm der Figur 2 stellt ein mögliches Verfahren zur Festlegung des zweiten Schwellenwertes SW₂ in einer beispielhaften Ausführung dar. Hierbei erfolgt in einem ersten Schritt 200 die Erfassung einer ersten Überschreitung eines ersten Schwellenwertes SW₁ durch entsprechende erste Sensorgröße, beispielsweise in Form eines Impulses oder von Signalwerten eines Magnetfeldsensors. Im nächsten Schritt 220 wird eine alternative Bewegungsgröße des Fahrrads erfasst, beispielsweise in Form einer Fortbewegungsgröße eines Beschleunigungssensors oder eines Intertialsensors. Aus der Fortbewegungsgröße lässt sich die Zeitdauer abschätzen, in der eine zweite Überschreitung des ersten Schwellenwerts SW₁ durch eine zweite Sensorgröße des ersten Sensors zu erwarten wäre. Um etwaige Geschwindigkeitsänderungen während der Erfassung der ersten und zweiten Sensorgröße zu berücksichtigen, kann die Zeitdauer kleiner als der Erwartungswert für das Eintreten des zweiten Überschreitens sein. Alternativ kann auch in Abhängigkeit plausibler Geschwindigkeitsänderungen ein Zeitraum abgeschätzt werden, in der die Überschreitung durch die zweite Sensorgröße zu erwarten ist. Denkbar ist, dass abhängig von der Geschwindigkeitsänderung je nach Fahrzeug, entsprechend die minimale und maximale Zeit derart gewählt wird, dass eine Geschwindigkeitsänderung von 1 m/s, 2 m/s, 5 m/s oder 10 m/s angenommen wird. Die abgeschätzte Zeitdauer beziehungsweise der Zeitraum kann dabei im Schritt 220 oder in nachfolgenden Vergleichsschritt 240 bestimmt werden. Im Vergleichsschritt 240 wird geprüft, ob nach der bestimmten Zeitdauer beziehungsweise im bestimmten Zeitraum eine zweite Sensorgröße des ersten Sensors 120 erfasst wird, die den ersten Schwellenwert SW₁ überschreitet. Wird hier eine zweite Überschreitung des erste Schwellenwertes SW₁ durch die zweite Sensorgröße erkannt, wird das Verfahren im Schritt 280 mit der Ermittlung des Geschwindigkeitswertes basierend auf dem zeitlichen Abstand zwischen der ersten und zweiten Überschreitung des Schwellenwerts SW₁ durch die entsprechende Sensorgröße weiterverfolgt. Wird jedoch erkannt, dass die zweite Überschreitung des ersten Schwellenwerts SW₁ durch die zweite Sensorgröße ausbleibt, wird davon ausgegangen, dass die Signalstärke der zweiten Sensorgröße zu klein ist, um die Überschreitung auszulösen. In diesem Fall wird im nachfolgenden Schritt 260 ein zweiter Schwellenwert SW₂ für die weitere Ermittlung des Geschwindigkeitswertes festgelegt. Dieser zweite Schwellenwert SW₂ wird derart gewählt, dass er niedriger als der erste Schwellenwert SW₁ ist, beispielsweise indem der zweite Schwellenwert SW₂ als ein prozentualer Anteil des Werts des ersten Schwellenwerts SW₁ festgelegt wird. Es ist jedoch auch möglich, einen absoluten Wert für den zweiten Schwellenwert SW₂ zu wählen. Optional kann auch vorgesehen sein, dass die Intensitätsverteilung der ersten und/oder zweiten Sensorgröße ausgewertet wird und der zweite Schwellenwert SW₂ derart gewählt wird, dass eine sichere Detektion der Überschreitung sichergestellt wird. Im nächsten Schritt 280 wird der Geschwindigkeitswert basierend auf der ersten und der zweiten Sensorgröße beziehungsweise dem zeitlichen Abstand der Überschreitung des ersten und/oder zweiten Schwellenwerts ermittelt. Wenn beide Sensorgrößen den ersten Schwellenwert SW₁ überschreiten, wird der zeitliche Abstand der beiden Überschreitungen für die Ermittlung des Geschwindigkeitswertes verwendet. Wird im Schritt 240 erkannt, dass die zweite Sensorgröße den ersten Schwellenwert SW₁ nicht übersteigt, wird für den zeitlichen Abstand das Überschreiten des ersten Schwellenwerts SW₁ durch die erste Sensorgröße und das Überschreiten des zweiten Schwellenwerts SW₂ durch die zweite Sensorgröße herangezogen. Optional kann auch vorgesehen sein, dass bei einem ausbleibenden Überschreiten des ersten Schwellenwertes SW₁ durch wenigstens einen der beiden Sensorgrößen nur noch der zweite Schwellenwert SW₂ für alle folgenden Bestimmungen des zeitlichen Abstands sowie der Ermittlung des Geschwindigkeitswertes verwendet werden. Anschließend kann das Verfahren beendet werden oder erneut mit der Erfassung der ersten Sensorgröße im Schritt 200 durchlaufen werden, gegebenenfalls mit dem erniedrigten zweiten Schwellenwert SW₂.

In einer Weiterbildung der Erfindung kann vorgesehen sein, dass geprüft wird, ob der zweite Schwellenwert SW₂ ausreichend erniedrigt worden ist, um die Überschreitung durch die erste und/oder zweite Sensorgröße zu erfassen. So kann vorgesehen sein, dass nach der Verwendung des zweiten Schwellenwerts SW₂ im Schritt 200 sowie Schritt 240 zur Bestimmung des zeitlichen Abstands beider Sensorgrößen erkannt wird, dass wenigstens eine der beiden Sensorgrößen zur Bestimmung des zeitlichen Abstands und somit zur Ermittlung des Geschwindigkeitswertes den neuen niedrigeren zweiten Schwellenwert SW₂ nicht übersteigt. In diesem Fall kann vorgesehen sein, den zweiten Schwellenwert SW₂ weiter zu reduzieren. Dies kann beispielsweise in der Festlegung im Schritt 260 erfolgen.

Optional kann auch vorgesehen sein, den zweiten Schwellenwert SW₂ wieder zu erhöhen, zum Beispiel bis auf den Wert des ersten Schwellenwerts SW₁. Hierzu kann im Schritt 240, 260 oder 280 geprüft werden, ob die erste und zweite Sensorgröße sowohl den niedrigeren zweiten Schwellenwert SW₂ als auch den höheren ersten (Ausgangs-)Schwellenwert SW₁ übersteigt. Wird dabei erkannt, dass die Signalstärke der ersten und zweiten Sensorgröße wieder ausreichend hoch ist, kann im schritt 280, im Schritt 200 oder im Schritt 240 der für die Ableitung des zeitlichen Abstands verwendete Schwellenwert wieder auf den ersten Schwellenwert SW₁ festgelegt werden. Optional kann auch vorgesehen sein, dass die Zurücksetzung auf den ursprünglichen ersten Schwellenwert SW₁ erst erfolgt, wenn bei wenigstens zwei aufeinander folgenden Bestimmungen des zeitlichen Abstands beide Sensorgrößen den ersten Schwellenwert SW₁ übersteigen, um eine nur kurzzeitige Verbesserung der Signalstärke auszuschließen.

Die Erhöhung oder Erniedrigung des zweiten Schwellenwertes SW₂ kann auch in Abhängigkeit der Erfassung eines Maßes erfolgen, welches die Differenz zwischen den Signalstärken der Sensorgrößen, insbesondere deren Maximalwerten, und den Schwellenwerten wiederspiegelt. Hierbei kann bei einer positiven Überschreitung des entsprechenden Schwellenwertes in Abhängigkeit der so erfassten Differenz eine Erhöhung des zweiten Schwellenwerts SW₂ vorgesehen sein, zum Beispiel im Schritt 280. Entsprechend kann bei einer negativen Differenz zwischen Schwellenwert und Signalstärke der Sensorgröße eine Erniedrigung oder Verringerung des zweiten Schwellenwerts SW₂ vorgesehen sein, zum Beispiel in Abhängigkeit der erfassten Differenz.

Es sei darauf hingewiesen, dass mit der Erfassung der Geschwindigkeit in Form von zwei Sensorgrößen mittels des ersten Sensors 120 ein zeitlich gemittelter Geschwindigkeitswert ermittelt wird, der geringeren Schwankungen unterliegt als ein mittels des zweiten Sensors 130 beziehungsweise 140 aus der Fortbewegungsgröße abgeleiteter Geschwindigkeitswert. Insbesondere zur Steuerung des Antriebs basierend auf diesem Geschwindigkeitswertes ist ein geringer schwankender Wert hilfreicher, da unter anderem die Motorsteuerung eine gewisse Trägheit aufweist, welche nur mit Aufwand und erhöhtem Verschleiß auf schnelle Geschwindigkeitsänderungen reagieren könnte.

## Patentansprüche

1. Verfahren zur Ermittlung eines Geschwindigkeitswertes eines Fahrzeugs, insbesondere eines Zweirads, wobei das Verfahren
• mittels eines ersten Sensors (120) wenigstens eine erste und eine zweite Sensorgröße in Abhängigkeit der Bewegung eines Rades des Fahrzeugs erfasst,
• aus dem zeitlichen Abstand der ersten und zweiten Sensorgröße den Geschwindigkeitswert ermittelt wird,
wobei zur Bestimmung des zeitlichen Abstands ein Vergleich der ersten und zweiten Sensorgröße mit einem ersten Schwellenwert (SW₁) erfolgt,
**dadurch gekennzeichnet, dass** das Verfahren
• mittels eines zweiten Sensors (130, 140) eine Fortbewegungsgröße erfasst, die die Bewegung des Fahrzeugs in Fahrtrichtung repräsentiert, und
• eine Zeitdauer in Abhängigkeit der Fortbewegungsgröße bestimmt, wobei die Zeitdauer innerhalb der nach der Überschreitung des ersten Schwellenwerts durch die erste Sensorgröße das Überschreiten des ersten Schwellenwerts durch die zweite Sensorgröße zu erwarten ist und
• einen zweiten Schwellenwert (SW₂) festlegt, der niedriger als der erste Schwellenwert (SW₁) ist, falls nach der Erfassung der ersten Sensorgröße und dem Ablauf der Zeitdauer keine zweite Sensorgröße erfasst wird, die den ersten Schwellenwert (SW₁) übersteigt, und
• für die Bestimmung des zeitlichen Abstands und zur Ermittlung des Geschwindigkeitswertes einen Vergleich wenigstens einer der ersten und zweiten Sensorgröße mit dem zweiten Schwellenwert (SW₂) durchführt.

2. Verfahren nach Anspruch 1, **dadurch gekennzeichnet, dass** das Verfahren
• in Abhängigkeit der Fortbewegungsgröße einen zu erwartenden zeitlichen Abstand zwischen der ersten und der zweiten Sensorgröße bestimmt, und
• die Zeitdauer in Abhängigkeit des zu erwartenden zeitlichen Abstands bestimmt,
wobei insbesondere vorgesehen ist, dass die Zeitdauer geringer als der zu erwartende zeitliche Abstand zwischen der ersten und zweiten Sensorgröße ist.

3. Verfahren nach einem der vorhergehenden Ansprüche, **dadurch gekennzeichnet, dass** der zweite Schwellenwert (SW₂) als eine prozentuale Absenkung des ersten Schwellenwerts (SW₁) festgelegt wird.

4. Verfahren nach einem der vorhergehenden Ansprüche, **dadurch gekennzeichnet, dass** das Verfahren in einem weiteren Schritt den zweiten Schwellenwert (SW₂) weiter erniedrigt festlegt, falls nach der Erfassung der ersten Sensorgröße und dem Ablauf der Zeitdauer keine zweite Sensorgröße erfasst wird, die den vorherigen zweiten Schwellenwert (SW₂) übersteigt.

5. Verfahren nach einem der vorhergehenden Ansprüche, **dadurch gekennzeichnet, dass** das Verfahren nach der Festlegung des zweiten Schwellenwertes (SW₂) weitere erste und zweite Sensorgröße erfasst, wobei der Geschwindigkeitswert in Abhängigkeit des zeitlichen Abstands der Überschreitung des zweiten Schwellenwerts (SW₂) durch die erste und zweite Sensorgröße ermittelt wird, insbesondere für den Fall, dass die erste und/oder zweite Sensorgröße den ersten Schwellenwert (SW₁) nicht übersteigt.

6. Verfahren nach Anspruch 5 oder 6, **dadurch gekennzeichnet, dass** bei dem Vergleich der ersten und zweiten Sensorgröße mit dem zweiten Schwellenwert (SW₂) die Differenz zwischen der Sensorgröße und dem zweiten Schwellenwert (SW₂) bestimmt wird, wobei der zweite Schwellenwert (SW₂)
• erhöht wird, wenn die Differenz einen vorgegebenen ersten Wert übersteigt oder
• erniedrigt wird, wenn die Differenz einen vorgegebenen zweiten Wert unterschreitet.

7. Verfahren nach einem der vorherigen Ansprüche, **dadurch gekennzeichnet, dass** das Verfahren dem zweiten Schwellenwert (SW₂) den Wert des ersten Schwellenwert (SW₁) zuweist, falls nach der Festlegung eines gegenüber dem ersten Schwellenwert (SW₁) niedrigeren zweiten Schwellenwert (SW₂), die erste und die zweite Sensorgröße sowohl den niedrigeren zweiten Schwellenwert (SW₂) als auch den höheren ersten Schwellenwert (SW₁) übersteigt.

8. Vorrichtung zur Ermittlung eines Geschwindigkeitswertes eines Fahrzeugs, insbesondere eines Zweirads, wobei das Fahrzeug ein Rad und einen ersten Sensor (120) umfasst, der eingerichtet ist, eine erste und eine zweite Sensorgröße in Abhängigkeit der Bewegung eines Rades des Fahrzeugs zu erfassen, wobei das Fahrezeug ferner einen zweiten Sensor (130, 140) aufweist, der dazu eingerichtet ist, eine Fortbewegungsgröße zu erfassen, die die Bewegung des Fahrzeugs in Fahrtrichtung repräsentiert,
wobei die Vorrichtung eine Steuereinheit (100) aufweist, die dazu eingerichtet ist, ein Verfahren nach einem der Ansprüche 1 bis 7 auszuführen, wobei die Steuereinheit so ausgebildet ist, dass
• wenigstens eine erste und eine zweite Sensorgröße eines ersten Sensors (120) in Abhängigkeit der Bewegung eines Rades des Fahrzeugs erfasst werden,
• aus dem zeitlichen Abstand der ersten und zweiten Bewegungsgröße der Geschwindigkeitswert ermittelt wird,
wobei zur Bestimmung des zeitlichen Abstands ein Vergleich der ersten und zweiten Sensorgröße mit einem ersten Schwellenwert (SW₁) erfolgt,
• wobei die erste und/oder zweite Bewegungsgröße mittels eines Magnetfeldsensors (120) und
• die Fortbewegungsgröße mittels eines Beschleunigungssensor (130) oder eines Inertialsensors (140) erfasst werden,
**dadurch gekennzeichnet, dass** die Steuereinheit (100)
• mittels eines zweiten Sensors (130, 140) eine Fortbewegungsgröße erfasst, die die Bewegung des Fahrzeugs in Fahrtrichtung repräsentiert, und
• eine Zeitdauer in Abhängigkeit der Fortbewegungsgröße bestimmt, und
• einen zweiten Schwellenwert (SW₂) festlegt, der niedriger ist als der erste Schwellenwert (SW₁) ist, falls nach der Erfassung der ersten Sensorgröße und dem Ablauf der Zeitdauer keine zweite Sensorgröße erfasst wird, die den ersten Schwellenwert (SW₁) übersteigt, und
• für die Bestimmung des zeitlichen Abstands und zur Ermittlung des Geschwindigkeitswerts einen Vergleich wenigstens einer der ersten und zweiten Sensorgröße mit dem zweiten Schwellenwert (SW₂) durchführt.

9. Fahrzeug, insbesondere ein Zweirad, mit einer Vorrichtung nach Anspruch 8 und/oder einer Steuereinheit (100), eingerichtet zur Durchführung des Verfahrens nach einem der Ansprüche 1 bis 7 und zur Ausgabe des damit ermittelten Geschwindigkeitswertes, wobei das Fahrzeug wenigstens
• einen Magnetfeldsensor (120) aufweist, der ein Magnetfeld eines in oder an einem der bei der Fortbewegung mitdrehenden Rades befindlichen Magnete erfasst, und
• einen Beschleunigungssensor (130) und/oder einen Inertialsensor (140) aufweist, der die Bewegung des Fahrzeugs in Richtung der Fortbewegungsrichtung und/oder Längsrichtung des Fahrzeugs erfasst.

## Claims

1. Method for determining a speed value of a vehicle, in particular a two-wheeled vehicle, wherein the method
• uses a first sensor (120) to capture at least a first and a second sensor variable on the basis of the movement of a wheel of the vehicle,
• determines the speed value from the time interval between the first and second sensor variables,
wherein, in order to determine the time interval, the first and second sensor variables are compared with a first threshold value (SW₁),
**characterized in that** the method
• uses a second sensor (130, 140) to capture a progressive movement variable representing the movement of the vehicle in the direction of travel, and
• determines a time period on the basis of the progressive movement variable, wherein the time period within which the first threshold value is expected to be exceeded by the second sensor variable after the first threshold value has been exceeded by the first sensor variable, and
• defines a second threshold value (SW₂) that is lower than the first threshold value (SW₁) if no second sensor variable that exceeds the first threshold value (SW₁) is captured after the first sensor variable has been captured and the time period has expired, and
• in order to determine the time interval and to determine the speed value, compares at least one of the first and second sensor variables with the second threshold value (SW₂).

2. Method according to Claim 1, **characterized in that** the method
• determines an expected time interval between the first and second sensor variables on the basis of the progressive movement variable, and
• determines the time period on the basis of the expected time interval,
wherein provision is made, in particular, for the time period to be shorter than the expected time interval between the first and second sensor variables.

3. Method according to one of the preceding claims, **characterized in that** the second threshold value (SW₂) is defined as a percentage reduction of the first threshold value (SW₁).

4. Method according to one of the preceding claims, **characterized in that**, in a further step, the method further reduces the second threshold value (SW₂) if no second sensor variable that exceeds the previous second threshold value (SW₂) is captured after the first sensor variable has been captured and the time period has expired.

5. Method according to one of the preceding claims, **characterized in that** the method captures further first and second sensor variables after defining the second threshold value (SW₂), wherein the speed value is determined on the basis of the time interval of the exceeding of the second threshold value (SW₂) by the first and second sensor variables, in particular if the first and/or second sensor variable does not exceed the first threshold value (SW₁).

6. Method according to Claim 5 or 6, **characterized in that**, when comparing the first and second sensor variables with the second threshold value (SW₂), the difference between the sensor variable and the second threshold value (SW₂) is determined, wherein the second threshold value (SW₂)
• is increased if the difference exceeds a predefined first value or
• is reduced if the difference falls below a predefined second value.

7. Method according to one of the preceding claims, **characterized in that** the method assigns the value of the first threshold value (SW₁) to the second threshold value (SW₂) if, after defining a second threshold value (SW₂) lower than the first threshold value (SW₁), the first and second sensor variables exceed both the lower, second threshold value (SW₂) and the higher, first threshold value (SW₁).

8. Device for determining a speed value of a vehicle, in particular a two-wheeled vehicle, wherein the vehicle comprises a wheel and a first sensor (120), which is configured to capture a first and a second sensor variable on the basis of the movement of a wheel of the vehicle, wherein the vehicle further has a second sensor (130, 140), which is configured to capture a progressive movement variable representing the movement of the vehicle in the direction of travel, wherein the device has a control unit (100) which is configured to perform a method according to one of Claims 1 to 7, wherein the control unit is designed such that
• at least a first and a second sensor variable of a first sensor (120) are captured on the basis of the movement of a wheel of the vehicle,
• the speed value is determined from the time interval between the first and second movement variables,
wherein, in order to determine the time interval, the first and second sensor variables are compared with a first threshold value (SW₁),
• wherein the first and/or second movement variable is captured by means of a magnetic field sensor (120), and
• the progressive movement variable is captured by means of an acceleration sensor (130) or an inertial sensor (140),
**characterized in that** the control unit (100)
• uses a second sensor (130, 140) to capture a progressive movement variable representing the movement of the vehicle in the direction of travel, and
• determines a time period on the basis of the progressive movement variable, and
• defines a second threshold value (SW₂) that is lower than the first threshold value (SW₁) if no second sensor variable that exceeds the first threshold value (SW₁) is captured after the first sensor variable has been captured and the time period has expired, and
• in order to determine the time interval and to determine the speed value, compares at least one of the first and second sensor variables with the second threshold value (SW₂).

9. Vehicle, in particular a two-wheeled vehicle, having a device according to Claim 8 and/or a control unit (100), configured to perform the method according to one of Claims 1 to 7 and to output the speed value thus determined, wherein the vehicle at least
• has a magnetic field sensor (120) which captures a magnetic field of a magnet located in or on one of the wheels rotating in the progressive movement, and
• has an acceleration sensor (130) and/or an inertial sensor (140) which captures the movement of the vehicle in the direction of the progressive movement direction and/or the longitudinal direction of the vehicle.

## Revendications

1. Procédé de détermination d'une valeur de vitesse d'un véhicule, en particulier d'un deux-roues, dans lequel le procédé
• détecte, au moyen d'un premier capteur (120), au moins une première et une seconde variable de capteur en fonction du mouvement d'une roue du véhicule,
• détermine la valeur de vitesse à partir de l'intervalle de temps entre la première et la seconde variable de capteur,
dans lequel, pour la détermination de l'intervalle de temps, une comparaison de la première et de la seconde variable de capteur avec une première valeur de seuil (SW₁) est effectuée,
**caractérisé en ce que**, le procédé
• détecte, au moyen d'un second capteur (130, 140), une variable de locomotion qui représente le mouvement du véhicule dans le sens de la marche, et
• détermine une période en fonction de la variable de locomotion, la période au cours duquel il est à attendre que la première valeur de seuil soit dépassée par la seconde variable de capteur après que la première valeur de seuil a été dépassée par la première variable de capteur, et
• définit une seconde valeur de seuil (SW₂) qui est inférieure à la première valeur de seuil (SW₁) si, après la détection de la première variable de capteur et l'écoulement de la période, aucune seconde variable de capteur dépassant la première valeur de seuil (SW₁) n'est détectée, et
• effectue, pour la détermination de l'intervalle de temps et pour la détermination de la valeur de vitesse, une comparaison d'au moins l'une de la première et de la seconde variable de capteur avec la seconde valeur de seuil (SW₂).

2. Procédé selon la revendication 1, **caractérisé en ce que** le procédé
• détermine, en fonction de la variable de locomotion, un intervalle de temps à attendre entre la première et la seconde variable de capteur, et
• détermine la période en fonction de l'intervalle de temps à attendre,
dans lequel il est en particulier prévu que la période soit inférieure à l'intervalle de temps à attendre entre la première et la seconde variable de capteur.

3. Procédé selon l'une des revendications précédentes, **caractérisé en ce que** la seconde valeur de seuil (SW₂) est définie comme étant une réduction en pourcentage de la première valeur de seuil (SW₁).

4. Procédé selon l'une des revendications précédentes, **caractérisé en ce que** le procédé, lors d'une étape supplémentaire, définit la seconde valeur de seuil (SW₂) à une valeur encore inférieure si, après la détection de la première variable de capteur et l'écoulement de la période, aucune seconde variable de capteur dépassant la seconde valeur de seuil (SW₂) précédente n'est détectée.

5. Procédé selon l'une des revendications précédentes, **caractérisé en ce que** le procédé, après la définition de la seconde valeur de seuil (SW₂), détecte d'autres première et seconde variable de capteur, la valeur de vitesse étant déterminée en fonction de l'intervalle de temps entre le dépassement de la seconde valeur de seuil (SW₂) par la première et la seconde variable de capteur, en particulier dans le cas où la première et/ou la seconde variable de capteur ne dépasse pas la première valeur de seuil (SW₁).

6. Procédé selon la revendication 5 ou 6, **caractérisé en ce que**, lors de la comparaison de la première et de la seconde variable de capteur avec la seconde valeur de seuil (SW₂), la différence entre la variable de capteur et la seconde valeur de seuil (SW₂) est déterminée, dans lequel la seconde valeur de seuil (SW₂)
• est augmentée si la différence dépasse une première valeur prédéfinie ou
• est diminuée si la différence est inférieure à une seconde valeur prédéfinie.

7. Procédé selon l'une des revendications précédentes, **caractérisé en ce que** le procédé attribue à la seconde valeur de seuil (SW₂) la valeur de la première valeur de seuil (SW₁) si, après la définition d'une seconde valeur de seuil (SW₂) inférieure à la première valeur de seuil (SW₁), la première et la seconde variable de capteur dépassent à la fois la seconde valeur de seuil (SW₂) inférieure et la première valeur de seuil (SW₁) supérieure.

8. Dispositif de détermination d'une valeur de vitesse d'un véhicule, en particulier d'un deux-roues, le véhicule comprenant une roue et un premier capteur (120) qui est conçu pour détecter une première et une seconde variable de capteur en fonction du mouvement d'une roue du véhicule, le véhicule comportant en outre un second capteur (130, 140) qui est conçu pour détecter une variable de locomotion qui représente le mouvement du véhicule dans le sens de la marche, le dispositif comportant une unité de commande (100) qui est conçue pour mettre en œuvre un procédé selon l'une des revendications 1 à 7, l'unité de commande étant conçue de telle sorte
• qu'au moins une première et une seconde variables de capteur d'un premier capteur (120) soient détectées en fonction du mouvement d'une roue du véhicule,
• que la valeur de vitesse soit déterminée à partir de l'intervalle de temps entre la première et la seconde variable de capteur,
dans lequel, pour la détermination de l'intervalle de temps, une comparaison de la première et de la seconde variable de capteur avec une première valeur de seuil (SW₁) est effectuée,
• dans lequel la première et/ou la seconde variable de mouvement sont détectées au moyen d'un capteur de champ magnétique (120) et
• la variable de locomotion est détectée au moyen d'un capteur d'accélération (130) ou d'un capteur inertiel (140),
**caractérisé en ce que** l'unité de commande (100)
• détecte, au moyen d'un second capteur (130, 140), une variable de locomotion qui représente le mouvement du véhicule dans le sens de la marche, et
• détermine une période en fonction de la variable de locomotion, et
• définit une seconde valeur de seuil (SW₂) qui est inférieure à la première valeur de seuil (SW₁) si, après la détection de la première variable de capteur et l'écoulement de la période, aucune seconde variable de capteur dépassant la première valeur de seuil (SW₁) n'est détectée, et
• effectue, pour la détermination de l'intervalle de temps et pour la détermination de la valeur de vitesse, une comparaison d'au moins l'une de la première et de la seconde variable de capteur avec la seconde valeur de seuil (SW₂).

9. Véhicule, en particulier un deux-roues, comprenant un dispositif selon la revendication 8 et/ou une unité de commande (100) conçue pour la mise en œuvre du procédé selon l'une des revendications 1 à 7 et pour la fourniture en sortie de la valeur de vitesse ainsi déterminée, le véhicule comprenant au moins
• un capteur de champ magnétique (120) qui détecte un champ magnétique d'un ou de plusieurs aimants situés dans ou sur l'une des roues en rotation lors du déplacement, et
• un capteur d'accélération (130) et/ou un capteur inertiel (140) qui détecte le mouvement du véhicule dans le sens de la locomotion et/ou le sens longitudinal du véhicule.
